# EUROPÄISCHE PATENTSCHRIFT

(11) **EP 2 385 599 B1**
(45) Veröffentlichungstag und Bekanntmachung des Hinweises auf die Patenterteilung: **31.12.2014**
(21) Anmeldenummer: 11164588.3
(22) Anmeldetag: 03.05.2011
(51) Int. Cl.: H02G 15/113, G02B 6/44, H02G 15/013

(54) **Inline-Kabelmuffe**
Inline cable sleeve
Jonction de câbles en ligne

(30) Priorität: 07.05.2010 DE 202010006582 U
(43) Veröffentlichungstag der Anmeldung: 09.11.2011
(73) Patentinhaber: CCS Technology, Inc., Wilmington, DE 19803 (US)
(72) Erfinder: Breuer-Heckel, Mike, Dipl.-Ing., 44143, Dortmund (DE); Badura, Stefan, Dipl.-Ing., 58708, Menden (DE); Thibault, Simon, 58099, Hagen (DE); Kupczyk, Andreas, 58099, Hagen (DE); Bughardt-Busch, Claudia, 45130, Essen (DE); Schulte, Wolfgang, Dipl.-Ing., 58339, Breckerfeld (DE)
(74) Vertreter: Sturm, Christoph

(56) Entgegenhaltungen:
- WO-A1-2008/051671
- JP-A- 2002 056 906
- US-A- 6 152 767
- US-A1- 2003 081 396
- US-A1- 2005 167 147

## Beschreibung

Die Erfindung betrifft eine Inline-Kabelmuffe nach dem Oberbegriff des Anspruchs 1.

Kabelmuffen werden in Nachrichtenkabelnetzwerken zum Schutz von Spleißverbindungen an Verbindungsstellen von zwei Nachrichtenkabeln sowie zum Schutz von Abzweigstellen oder Aufteilungsstellen von Nachrichtenkabeln verwendet. Dabei müssen die Kabelmuffen die Kontinuität der Nachrichtenkabel so gewährleisten, als wären die Nachrichtenkabel nicht unterbrochen. Aus dem Produktkatalog "Zubehör für LWL-Kabelnetze, Ausgabe 1, Seite 75, Corning Cable Systems, Jahr 2001 " sind einerseits als Inline-Kabelmuffen sowie andererseits als Hauben-Kabelmuffen ausgebildete Kabelmuffen bekannt, die allesamt ein Gehäuse aufweisen, welches einen Innenraum der Kabelmuffe definiert und den Innenraum derselben nach außen abdichtet. In dem durch das Gehäuse der Kabelmuffe definierten Innenraum sind üblicherweise Baugruppen zum Verbinden, nämlich zum Spleißen, von in den Nachrichtenkabeln geführten Nachrichtenleitern angeordnet. Bei als Hauben-Kabelmuffen ausgebildeten Kabelmuffen wird das Gehäuse von einem haubenartigen Abdeckkörper und einem Dichtungskörper gebildet, wobei der Dichtungskörper an einer Seite des haubenartigen Abdeckkörpers abgedichtete Kabeleinführungsbereiche definiert, über welchen sämtliche Kabel in den Innenraum der Kabelmuffe eingeführt werden können. Bei als Inline-Kabelmuffen ausgebildeten Kabelmuffen sind an zwei sich gegenüberliegenden Seiten des Abdeckkörpers abgedichtete Kabeleinführungsbereiche zum Einführen von Kabeln in den Innenraum der Kabelmuffe ausgebildet, so dass Inline-Kabelmuffen in einer Linie mit den Kabeln installiert werden können.

Obwohl bereits bei aus der Praxis bekannten Inline-Kabelmuffen über die Kabeleinführungsbereiche in die Inline-Kabelmuffe eingeführte Nachrichtenkabel gut abgedichtet werden können, besteht Bedarf an einer weiteren Verbesserung der Abdichtung der in eine Inline-Kabelmuffe einzuführenden Nachrichtenkabel.

Aus der US 2005/167147 A1 ist eine Kabelmuffe gemäß dem Oberbegriff des Patentanspruchs 1 bekannt.

Weiter Stand der Technik ist aus der WO 2008/051671 A1 bekannt.

Hiervon ausgehend liegt der vorliegenden Erfindung das Problem zu Grunde, eine neuartige Inline-Kabelmuffe zu schaffen.

Dieses Problem wird dadurch gelöst, dass die eingangs genannte Inline-Kabelmuffe durch die Merkmale des kennzeichnenden Teils des Patentanspruchs 1 weitergebildet ist.

Durch die erfindungsgemäße Positionierung der komprimierbaren und/oder deformierbaren Dichtungselemente zwischen den unterschiedlich konturierten Wänden kann ein definierter Abfluss der komprimierbaren und/oder deformierbaren Dichtungselemente beim Komprimieren und/oder Deformieren derselben gewährleistet und so eine verbesserte Abdichtung von Nachrichtenkabel im Bereich der Kabeleinführungsbereiche bereitgestellt werden.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. In der Zeichnung zeigt:
- Fig.1: eine perspektivische Ansicht eines bevorzugten Ausführungsbeispiels einer erfindungsgemäßen Inline-Kabelmuffe;
- Fig. 2: eine perspektivische Ansicht einer ersten Halbschale der Inline-Kabelmuffe gemäß Fig. 1;
- Fig. 3: eine perspektivische Ansicht einer zweiten Halbschale der Inline-Kabelmuffe gemäß Fig. 1;
- Fig. 4: einen ersten vergrößerten Ausschnitt der Fig. 2;
- Fig. 5: einen zweiten vergrößerten Ausschnitt der Fig. 2;
- Fig. 6: den Ausschnitt der Fig. 3 ohne Dichtungselement, Druckstücke und Anpassungstücke;
- Fig. 7: eine weitere perspektivische Ansicht der Halbschale der Fig. 3;
- Fig. 8: einen vergrößerten Ausschnitt der Fig. 7;
- Fig. 9: eine Draufsicht auf die Halbschale der Fig. 3, 7 und 9;
- Fig. 10: eine perspektivische Ansicht eines Anpassstücks;
- Fig. 11: eine erste perspektivische Ansicht eines Druckstücks; und
- Fig. 12: eine zweite perspektivische Ansicht des Druckstücks der Fig. 11.

Die hier vorliegende Erfindung betrifft eine Inline-Kabelmuffe 10, die im gezeigten, bevorzugten Ausführungsbeispiel ein Gehäuse umfasst, das von einem aus zwei Halbschalen 11 und 12 zusammengesetzten Abdeckkörper 13 gebildet ist. Bei der Halbschale 11 handelt es sich im gezeigten Ausführungsbeispiel um eine sogenannte Unterschale und bei der Halbschale 12 um eine sogenannte Oberschale des Abdeckkörpers 13, die zusammen einen Innenraum 14 der Inline-Kabelmuffe 10 definieren. An sich gegenüberliegenden Seiten 15 und 16 der Inline-Kabelmuffe 10 bzw. des Abdeckkörpers 13 derselben sind Kabeleinführungsbereiche 17 ausgebildet, über welche Kabel in den Innenraum 14 der Inline-Kabelmuffe 10 eingeführt bzw. aus demselben herausgeführt werden können.

Im gezeigten Ausführungsbeispiel sind an beiden sich gegenüberliegenden Seiten 15 und 16 des Abdeckkörpers 13 jeweils zwei Kabeleinführungsbereiche 17 zur Einführung jeweils eines Kabels in den Innenraum 14 der Inline-Kabelmuffe 10 ausgebildet.

Es sei an dieser Stelle darauf hingewiesen, dass die Kabeleinführungsbereiche 17 an einen definierten Maximaldurchmesser von in die Inline-Kabelmuffe 10 einzuführenden Kabeln angepasst sind. Dann, wenn in die Inline-Kabelmuffe 10 Kabel mit kleineren Durchmessern eingeführt werden sollen, können im Bereich der Kabeleinführungsbereiche 17 Anpassstücke 18 positioniert werden, um den jeweiligen Kabeleinführungsbereich 17 über das jeweilige Anpassstück 18 an einen kleineren Durchmessers eines in die Inline-Kabelmuffe 10 einzuführenden Kabels anzupassen.

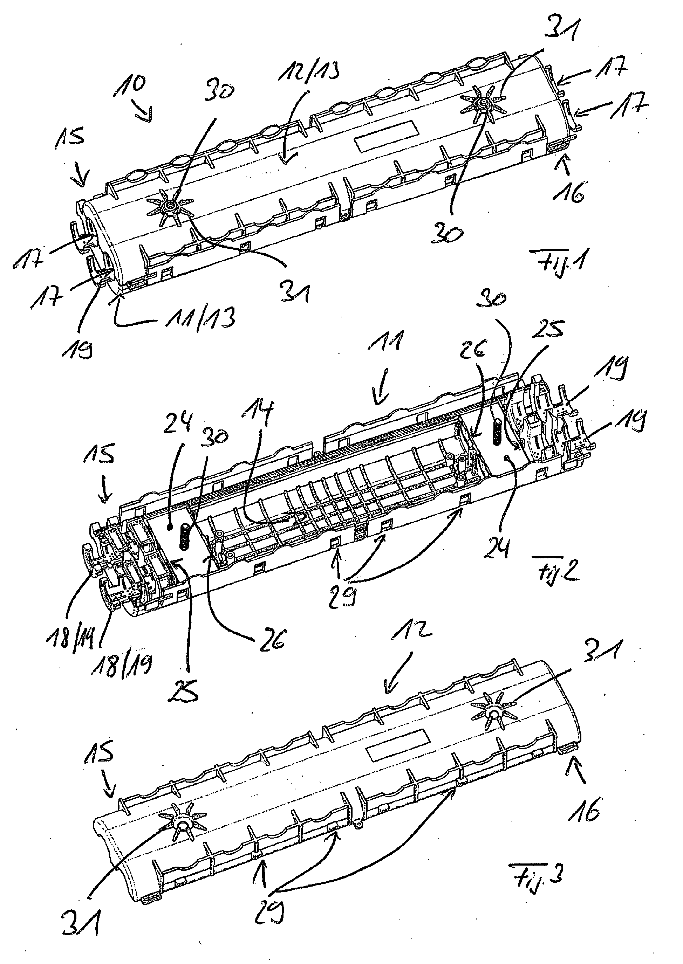

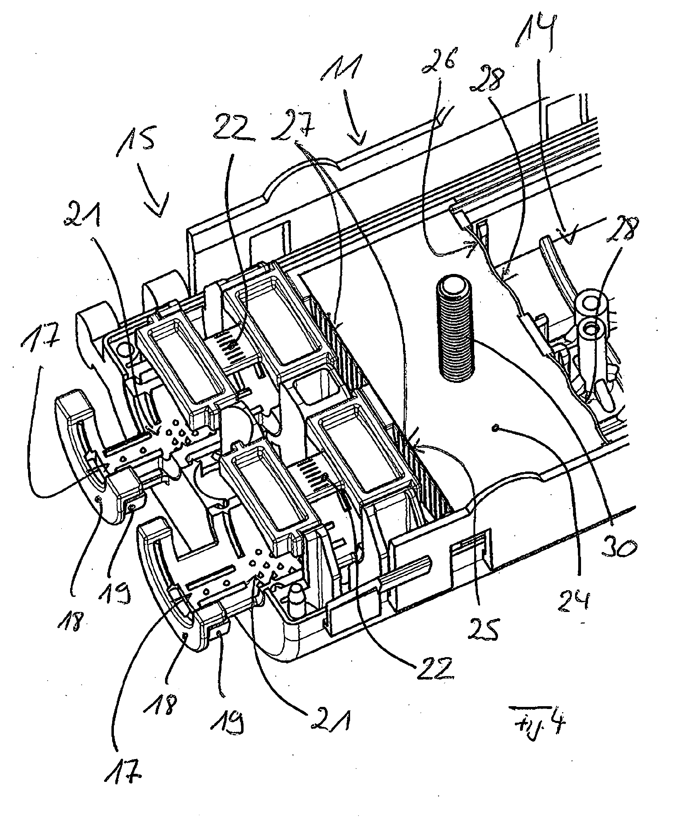

Gemäß Fig. 2, 4 sind in die Kabeleinführungsbereiche 17, die im Bereich der Seite 15 des Abdeckkörpers 13 ausgebildet sind, Anpassstücke 18 eingesetzt, nämlich gemäß Fig. 2 und 4 in die Unterschale 11 des Abdeckkörpers 13. Diese Anpassstücke 18 finden dabei in Kabelführungsstücken 19 Aufnahme, die an den Maximaldurchmesser eines einzuführenden Kabels ausgelegt sind. Die Anpassstücke 18 können bedarfsweise im Bereich jedes Kabeleinführungsbereichs 17 verwendet werden, in welchem dieselben am jeweiligen Kabelführungsstück 19 des jeweiligen Kabeleinführungsbereichs 17 zur Anlage kommen bzw. in demselben Aufnahme finden.

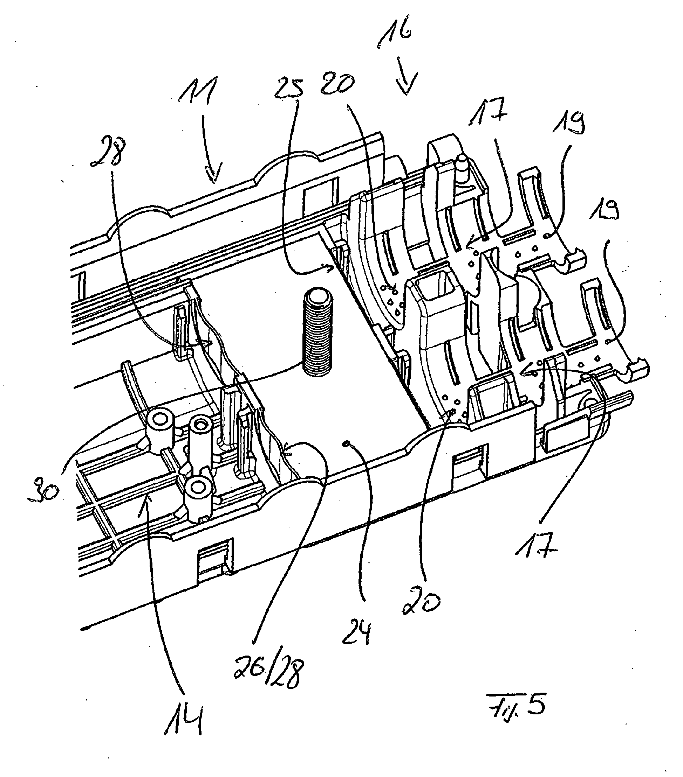

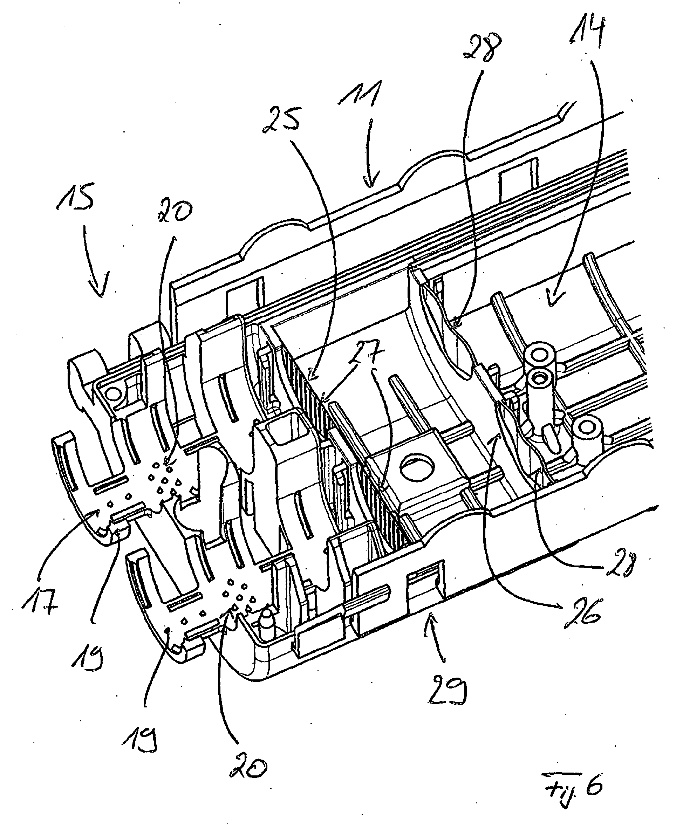

Wie Fig. 5 und 6 entnommen werden kann, verfügen sowohl die Kabeleinführungsstücke 19 als auch die Anpassstücke 18 über dornenartige Vorsprünge 20 bzw. 21, die dann, wenn ein Kabel in dem jeweiligen Kabeleinführungsbereich 17 zur Einführung in den Innenraum 14 der Inline-Kabelmuffe 10 geführt ist, in den Kabelmantel des jeweiligen Kabels eingreifen und so eine optimale Abfangung für das jeweilige Kabel gewährleisten.

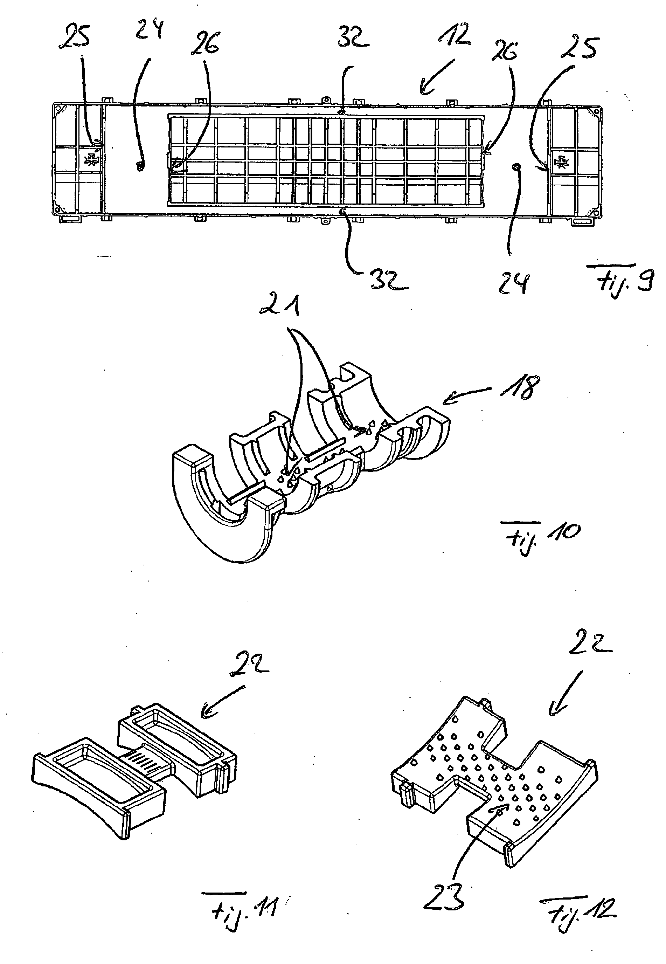

Zur Zugabfangung eines in den Innenraum 14 der Inline-Kabelmuffe 10 einzuführenden Kabels im jeweiligen Kabeleinführungsbereich 17 wirken mit dem jeweiligen Kabelführungsstück 19 bzw. dem jeweiligen Anpassstück 18 Druckstücke 22 zusammen, die gemäß Fig. 12 ebenfalls über dornenartige Vorsprünge 23 verfügen. Diese dornenartige Vorsprünge 23 der Druckstücke 22 verkrallen sich ebenfalls im Kabelmantel eines im Bereich des jeweiligen Kabeleinführungsbereichs 17 abzufangenden Kabels, sodass über eine große Umfangserstreckung des Kabelmantels dornenartige Vorsprünge 20, 21 bzw. 23 in den Kabelmantel eines abzufangenden Kabels eingreifen.

Die Verpressung eines in einem Kabeleinführungsbereich 17 abzufangenden Kabels mit dem jeweiligen Druckstück 22 und dem Kabelführungsstück 19 bzw. dem gegebenenfalls im Kabelführungsstück 19 aufgenommenen Anpassstück 18 erfolgt vorzugsweise über einen Kabelbinder, der das jeweilige Kabelführungsstück 19, das Druckstück 22 und das Kabel umschließt und bei Festziehen desselben das Druckstück 22 gegen das abzufangende Kabel und das Kabel gegen das Kabelführungsstück 19 bzw. das in demselben aufgenommene Anpassstück 18 drückt. Dann, wenn anstelle von Kabelbindern Rohrschellen verwendet werden, kann auf Druckstücke 22 auch verzichtet werden.

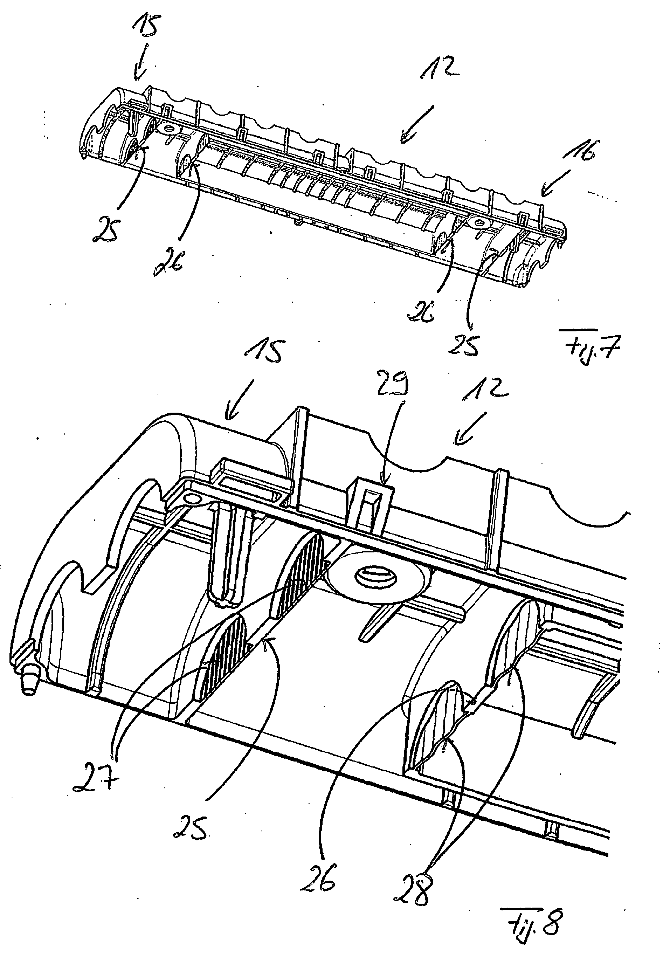

Um eine Abdichtung der über die Kabeleinführungsbereiche 17 in den Innenraum 14 der Inline-Kabelmuffe 10 einzuführenden Kabel zu gewährleisten, sind im Bereich beider sich gegenüberliegenden Seiten 15 und 16 des Abdeckkörpers 13 der Inline-Muffe 10, an welchen die Kabeleinführungsbereiche 17 ausgebildet sind, sowohl im Bereich der Unterschale 11 als auch im Bereich der Oberschale 12, komprimierbare und/oder deformierbare Dichtungselemente 24 positioniert, die jeweils zwischen Wänden 25 und 26 angeordnet sind. In Fig. 6 sind für die Unterschale 11 und in Fig. 8 für die Oberschale 12 diese Wände 25 und 26 jeweils ohne dazwischen angeordnetes, komprimierbares und/oder deformierbares Dichtungselement 24 gezeigt, wobei es sich bei den Wänden 25 jeweils um vom Innenraum 14 abwandte Wände und bei den Wänden 26 jeweils um dem Innenraum 14 zugewandte Wände handelt.

Wie am besten den Darstellungen der Fig. 6 und 8 entnommen werden kann, sind diese Wände 25 und 26, zwischen denen jedes komprimierbare und/oder deformierbare Dichtungselement 24 positioniert ist, also die dem Innenraum 14 zugewandten Wände 26 und die vom Innenraum 14 abgewandten Wände 25, unterschiedlich ausgebildet, wobei durch diese unterschiedliche Ausbildung der Wände 25 und 26 gewährleistet wird, dass bei einer Komprimierung und/oder Deformierung eines Dichtungselements 24 in Folge einer Abdichtung eines in den Innenraum 14 einzuführenden Kabels das jeweilige Dichtungselement 24 bevorzugt über die jeweilige vom Innenraum 14 der Inline-Kabelmuffe 10 abgewandte Wand 25 abfließt, wohingegen die jeweilige dem Innenraum 14 der Kabelmuffe 10 zugewandte Wand 26 einen Abfluss des jeweiligen Dichtungselements 24 in den Innenraum 14 der Kabelmuffe 10 hinein unterbindet.

So erstrecken sich die Wände 25 und 26, also sowohl die vom Innenraum 14 abgewandten Wände 25 als auch die dem Innenraum 14 zugewandten Wände 26, jeweils quer zu einer Einführungseinrichtung der Kabeleinführungsbereiche 14 mit einer definierten Breite und einer definierten Dicke, wobei den vom Innenraum 14 abgewandten Wänden 25 Sollbruchstellen 27 zugeordnet sind, die bei Abdichtung eines Kabels im jeweiligen Kabeleinführungsbereich 17 brechen, bzw. entlang welcher die jeweilige Wand 25 aufreißt.

Die Sollbruchstellen 27 sind in den Figuren als schwarze Linien in den Wänden 25 dargestellt, wobei die dem Innenraum abgewandten Wände 25 in den Bereichen, in welchen die Sollbruchstellen 27 ausgebildet sind, gegenüber anderen Abschnitten der jeweiligen Wand 25 eine reduzierte Dicke und damit Materialstärke aufweisen, um das Aufreißen dieser Wände 25 entlang der Sollbruchstellen 27 zu erleichtern.

Die Sollbruchstellen 27 erstrecken sich dabei jeweils quer zur Breite der Wände 25, die vom Innenraum 14 der Inline-Kabelmuffe 10 abgewandt sind.

Die dem innenraum 14 der Inline-Kabelmuffe 10 zugewandten wande 26, die sich ebenfalls quer zur Einführungsrichtung der Kabeleinführungsbereiche 17 erstrecken, weisen keine Sollbruchstellen sondern vielmehr Sollverformungsstellen 28 auf, die sich bei Abdichtung eines Kabels im jeweiligen Kabeleinführungsbereich 17 verformen, und zwar ohne dass dieselben brechen bzw. ohne Aufreißen der jeweiligen Wand 26. Diese Sollverformungsstellen 28 werden vorzugsweise dadurch bereitgestellt, dass die Wände 26, die dem Innenraum 14 der Inline-Kabelmuffe 10 zugewandt sind, im Bereich der Sollverformungsstellen 28 einerseits eine gewellte Kontur und andererseits eine reduzierte Materialstärke aufweisen. Hierdurch kann ein Verformen der Sollverformungsstellen 28 ohne Brechen derselben gewährleistet werden.

Dann, wenn demnach ein Kabel in einem Kabeleinführungsbereich 17 der Inline-Kabelmuffe 10 abgedichtet wird, erstreckt sich das Kabel nicht nur durch den Kabeleinführungsbereich 17, sondern auch durch das jeweilige komprimierbare und/oder deformierbare Dichtungselement 24 sowie durch die beiden Wände 25 und 26, zwischen welchen das komprimierbare und/oder deformierbare Dichtungselement 24 eingepasst ist, wobei die dem Innenraum 14 der Inline-Kabelmuffe 10 zugewandte Wand 26 abschnittsweise verformt und die dem Innenraum 14 abgewandte Wand 25 abschnittsweise aufgebrochen wird, sodass bei Abdichtung des Kabels im Einführungsbereich 17 bzw. im Bereich des jeweiligen Dichtungselements 24 das jeweilige Dichtungselement 24 ausschließlich über die teilweise aufgebrochene Wand 25 abfließen kann, jedoch nicht über die lediglich verformte Wand 26 in den Innenraum 14 der Inline-Kabelmuffe 10 abfließen kann.

Im gezeigten Ausführungsbeispiel sind die Halbschalen 11 und 12 des Abdeckkörpers 13 der Inline-Kabelmuffe 10 über clipsartige Befestigungselemente 29 verrastbar, wobei bei diesem Verrasten über die Befestigungselemente 29 die beiden Halbschalen 11 und 12 unter Komprimierung und/oder Deformierung der Dichtungselemente 24 der beiden Halbschalen 11 und 12 zusammengepresst werden.

Dann, wenn eine höhere Druckbeaufschlagung der Dichtungselemente 24 zur Komprimierung und/oder Deformierung derselben erforderlich ist, können die beiden Halbschalen 11 und 12 gegebenenfalls über zusätzliche Befestigungsschrauben 30 zusätzlich verpresst werden, wobei sich die Befestigungsschrauben 30 durch beide Halbschalen 11 und 12 erstrecken, nämlich im Bereich der Dichtungselemente 24 derselben. Auf diese Befestigungsschrauben 30 kann gegebenenfalls verzichtet werden.

Um einerseits eine gute Zugänglichkeit der Befestigungsschrauben 30 außerhalb der Inline-Kabelmuffe 10 für Monteure zu gewährleisten, jedoch weiterhin eine Beschädigung der Befestigungsschrauben 30 beim zum Beispiel Ausgraben einer unterirdisch verlegten Inline-Kabelmuffe 10 zu vermeiden, sind an einer Außenwand von Oberschale 12 und Unterschale 11 rampenartige Schutzstege 31 ausgebildet, um solche Abschnitte der Befestigungsschraube 30 zu schützen, die bei montierter Inline-Kabelmuffe 10 gegenüber den Halbschalen 11, 12 vorstehen.

Im gezeigten, bevorzugten Ausführungsbeispiel sind im Bereich der Halbschale 12, also im Bereich der Oberschale, die komprimierbaren und/oder deformierbaren Dichtungselemente 24, die den Kabeleinführungsbereichen 17 zugeordnet sind, über komprimierbare und/oder deformierbare Dichtungselemente 32 gekoppelt, die parallel zu Längsrändern der Halbschale 12 verlaufen. Hierdurch wird im Bereich der Halbschale 12 ein ringartiger, geschlossener Dichtbereich durch die komprimierbaren und/oder deformierbaren Dichtelemente 24 und 32 gebildet. Gegebenenfalls kann auch im Bereich der Halbschale 11 ein analoger, geschlossener und ringartiger Dichtbereich ausgebildet sein.

Bei den komprimierbaren und/oder deformierbaren Dichtungselementen 24 und gegebenenfalls 32 handelt es sich vorzugsweise um gelartige Dichtungselemente, so zum Beispiel um Polyurethangele oder Silikongele.

Derartige gelartige Dichtungseiemente sind deformierbar jedoch typischerweise nicht komprimierbar.

Es können auch Dichtungselemente 24 verwendet werden, die abschnittsweise aus unterschiedlichen Werkstoffen zusammengesetzt sind, so zum Beispiel aus einem deformierbaren, gelartigen Dichtungswerkstoff und aus einem schaumartigen, komprimierbaren Dichtungswerkstoff.

Es finden Dichtungselemente mit einer Shore A Härte kleiner 10 Verwendung, um eine gute Deformierbarkeit und/oder Komprimierbarkeit derselben unabhängig von Kabeldurchmesser abzudichtender Kabel zu gewährleisten.

Die den unterschiedlichen Halbschalen 11 und 12 zugeordneten, komprimierbaren und/oder deformierbaren Dichtungselemente 24 können unterschiedliche Größen aufweisen.

Ebenso können die zu den unterschiedlichen Seiten 15 und 16 der Halbschalen 11 und 12 positionierten Dichtungselemente 24 unterschiedliche Größen aufweisen.

### Bezugszeichenliste

- 10: Inline-Kabelmuffe
- 11: Halbschale / Unterschale
- 12: Halbschale / Oberschale
- 13: Abdeckkörper
- 14: Innenraum
- 15: Seite
- 16: Seite
- 17: Kabeleinführungsbereich
- 18: Anpassstück
- 19: Kabelführungsstück
- 20: Vorsprung
- 21: Vorsprung
- 22: Druckstück
- 23: Vorsprung
- 24: Dichtungselemente
- 25: Wand
- 26: Wand
- 27: Sollbruchstelle
- 28: Sollverformungsstelle
- 29: Befestigungselemente
- 30: Befestigungsschraube
- 31: Schutzsteg
- 32: Dichtungselemente

## Patentansprüche

1. Inline-Kabelmuffe, mit einem Gehäuse, das einen Innenraum der Kabelmuffe begrenzt und die Kabelmuffe nach außen abdichtet, wobei das Gehäuse einen aus Halbschalen (11, 12) zusammengesetzten Abdeckkörper (13) umfasst, der an sich gegenüberliegenden Seiten (15, 16) abgedichtete Kabeleinführungsbereiche (17) zum Einführen von Kabeln in den Innenraum der Kabelmuffe bzw. zum Ausführen von Kabeln aus demselben heraus ausgebildet, wobei an den sich gegenüberliegenden Seiten (15, 16) des Abdeckkörpers (13) im Bereich der Halbschalen (11, 12) komprimierbare und/oder deformierbare Dichtungselemente (24) positioniert sind, die jeweils zwischen Wänden, nämlich zwischen einer dem Innenraum (14) der Kabelmuffe zugewandten Wand (26) und einer vom Innenraum (14) der Kabelmuffe abgewandten Wand (25) positioniert sind, **dadurch gekennzeichnet, dass** die dem Innenraum der Kabelmuffe zugewandten Wände (26) und die vom Innenraum der Kabelmuffe abgewandten Wände (25) derart unterschiedlich ausgebildet sind, dass die vom Innenraum (14) der Kabelmuffe abgewandten Wände (25) sich quer zur Einführungsrichtung der Kabeleinführungsbereiche erstrecken und Sollbruchstellen (27) aufweisen, die bei Abdichtung eines Kabels im jeweiligen Kabeleinführungsbereich (17) brechen bzw. entlang derer die jeweilige Wand (25) aufreißt, wohingegen die dem Innenraum (14) der Kabelmuffe zugewandten Wände (26) sich ebenfalls quer zur Einführungsrichtung der Kabeleinführungsbereiche erstrecken und Sollverformungsstellen (28) aufweisen, die sich bei Abdichtung eines Kabels im jeweiligen Kabeleinführungsbereich (17) verformen, sodass bei einer Komprimierung und/oder Deformierung der Dichtungselemente (24) das jeweilige Dichtungselement (24) bevorzugt über die jeweilige vom Innenraum (14) der Kabelmuffe abgewandte Wand (25) abfließt, wohingegen die jeweilige dem Innenraum der Kabelmuffe zugewandten Wand (26) einen Abfluss des jeweiligen Dichtungselements (24) in den Innenraum der Kabelmuffe hinein unterbindet.

2. Inline-Kabelmuffe nach Anspruch 1, **dadurch gekennzeichnet, dass** die Sollbruchstellen (27) sich jeweils quer zur Breite dieser Wände (25) erstrecken.

3. Inline-Kabelmuffe nach Anspruch 1 oder 2, **dadurch gekennzeichnet, dass** die Wände (25) im Bereich der Sollbruchstellen (27) eine reduzierte Dicke aufweisen.

4. Inline-Kabelmuffe nach einem der Ansprüche 1 bis 3, **dadurch gekennzeichnet, dass** sich die Sollverformungsstellen (28) bei Abdichtung eines Kabels im jeweiligen Kabeleinführungsbereich (17) ohne Brechen derselben bzw. ohne Aufreißen der jeweiligen Wand (26) verformen.

5. Inline-Kabelmuffe nach einem der Ansprüche 1 bis 4, **dadurch gekennzeichnet, dass** die Sollverformungsstellen (28) durch eine gewellte Kontur der jeweiligen Wand (26) gebildet sind.

6. Inline-Kabelmuffe nach einem der Ansprüche 1 bis 5, **dadurch gekennzeichnet, dass** die Wände (26) im Bereich der Sollverformungsstellen (28) eine reduzierte Dicke aufweisen.

7. Inline-Kabelmuffe nach einem der Ansprüche 1 bis 6, **dadurch gekennzeichnet, dass** die Halbschalen (11, 12) über Befestigungsschrauben (30) zusammenpressbar sind.

8. Inline-Kabelmuffe nach einem der Ansprüche 1 bis 7, **dadurch gekennzeichnet, dass** die komprimierbaren und/oder deformierbaren Dichtungselemente (24) gelartige Dichtungselemente sind.

9. Inline-Kabelmuffe nach Anspruch 8, **dadurch gekennzeichnet, dass** die gelartigen Dichtungselemente eine Shore A Härte kleiner 10 aufweisen.

10. Inline-Kabelmuffe nach einem der Ansprüche 1 bis 9, **dadurch gekennzeichnet, dass** die komprimierbaren und/oder deformierbaren Dichtungselemente (24) der unterschiedlichen Halbschalen (11, 12) unterschiedlich groß sind.

11. Inline-Kabelmuffe nach einem der Ansprüche 1 bis 10, **dadurch gekennzeichnet, dass** die komprimierbaren und/oder deformierbaren Dichtungselemente (24) mindestens einer Halbschale (12) über sich entlang von Längsrändern der jeweiligen Halbschale verlaufende, komprimierbare und/oder deformierbare Dichtungselemente (32) unter Ausbildung eines ringartigen Dichtungsbereichs miteinander gekoppelt sind.

## Claims

1. Inline cable sleeve, with a housing, which delimits an interior of the cable sleeve and seals off the cable sleeve toward the outside, the housing comprising a covering body (13), which is composed of half-shells (11, 12) and is formed from cable insertion regions (17), which are sealed off on mutually opposite sides (15, 16), for inserting cables into the interior of the cable sleeve or for passing cables out of said interior, compressible and/or deformable sealing elements (24) being positioned on the mutually opposite sides (15, 16) of the covering body (13) in the region of the half-shells (11, 12) and each being positioned between walls, namely between a wall (26) facing the interior (14) of the cable sleeve and a wall (25) remote from the interior (14) of the cable sleeve, **characterized in that** the walls (26) facing the interior of the cable sleeve and the walls (25) remote from the interior of the cable sleeve are formed differently in such a way that, the walls (25) remote from the interior (14) of the cable sleeve extend transversely with respect to the insertion direction of the cable insertion regions and have desired breaking points (27), which break when a cable is sealed off in the respective cable insertion region (17), or along which the respective wall (25) tears open, whereas the walls (26) facing the interior (14) of the cable sleeve also extend transversely with respect to the insertion direction of the cable insertion regions and have desired deformation points (28), which deform when a cable is sealed off in the respective cable insertion region (17), such that in the event of a compression and/or deformation of the sealing elements (24), the respective sealing element (24) preferably flows away via the respective wall (25) remote from the interior (14) of the cable sleeve, whereas the respective wall (26) facing the interior of the cable sleeve prevents the respective sealing element (24) from flowing away into the interior of the cable sleeve.

2. Inline cable sleeve according to Claim 1, **characterized in that** the desired breaking points (27) each extend transversely with respect to the width of these walls (25).

3. Inline cable sleeve according to Claim 1 or 2, **characterized in that** the walls (25) have a reduced thickness in the region of the desired breaking points (27).

4. Inline cable sleeve according to one of Claims 1 to 3, **characterized in that** the desired deformation points (28) deform when a cable is sealed off in the respective cable insertion region (17) without said desired deformation points breaking or without the respective wall (26) tearing open.

5. Inline cable sleeve according to one of Claims 1 to 4, **characterized in that** the desired deformation points (28) are formed by a corrugated contour of the respective wall (26).

6. Inline cable sleeve according to one of Claims 1 to 5, **characterized in that** the walls (26) have a reduced thickness in the region of the desired deformation points (28).

7. Inline cable sleeve according to one of Claims 1 to 6, **characterized in that** the half-shells (11, 12) can be pressed together via fastening screws (30).

8. Inline cable sleeve according to one of Claims 1 to 7, **characterized in that** the compressible and/or deformable sealing elements (24) are gel-like sealing elements.

9. Inline cable sleeve according to Claim 8, **characterized in that** the gel-like sealing elements have a Shore A hardness of less than 10.

10. Inline cable sleeve according to one of Claims 1 to 9, **characterized in that** the compressible and/or deformable sealing elements (24) of the different half-shells (11, 12) have different sizes.

11. Inline cable sleeve according to one of Claims 1 to 10, **characterized in that** the compressible and/or deformable sealing elements (24) of at least one half-shell (12) are coupled to one another via compressible and/or deformable sealing elements (32), which run along longitudinal edges of the respective half-shell, so as to form an annular sealing region.

## Revendications

1. Manchon de câble en ligne, comprenant un boîtier qui délimite un espace interne du manchon de câble et qui étanchéifie le manchon de câble vis-à-vis de l'extérieur, le boîtier comprenant un corps de recouvrement (13) constitué de demi-coques (11, 12), qui constitue des régions d'introduction de câble (17) étanchéifiées au niveau de côtés opposés (15, 16) pour l'introduction de câbles dans l'espace interne du manchon de câble ou pour faire ressortir des câbles hors de celui-ci, des éléments d'étanchéité (24) comprimables et/ou déformables étant positionnés au niveau des côtés opposés (15, 16) du corps de recouvrement (13) dans la région des demi-coques (11, 12), lesquels sont positionnés à chaque fois entre des parois, à savoir entre une paroi (26) tournée vers l'espace interne (14) du manchon de câble et une paroi (25) détournée de l'espace interne (14) du manchon de câble, **caractérisé en ce que** les parois (26) tournées vers l'espace interne du manchon de câble et les parois (25) détournées de l'espace interne du manchon de câble sont réalisées de manière différente de telle sorte que les parois (25) détournées de l'espace interne (14) du manchon de câble s'étendent transversalement à la direction d'introduction des régions d'introduction de câble et présentent des zones destinées à la rupture (27), qui se rompent lors de l'étanchéification d'un câble dans la région d'introduction de câble respective (17) ou le long desquelles la paroi respective (25) se déchire, tandis que les parois (26) tournées vers l'espace interne (14) du manchon de câble s'étendent également transversalement à la direction d'introduction des régions d'introduction de câble et présentent des zones destinées à la déformation (28), qui se déforment lors de l'étanchéification d'un câble dans la région d'introduction de câble respective (17), de sorte que, dans le cas d'une compression et/ou d'une déformation des éléments d'étanchéité (24), l'élément d'étanchéité respectif (24) s'écoule de préférence par-dessus la paroi respective (25) détournée de l'espace interne (14) du manchon de câble, tandis que la paroi respective (26) tournée vers l'espace interne du manchon de câble empêche un écoulement de l'élément d'étanchéité respectif (24) à l'intérieur de l'espace interne du manchon de câble.

2. Manchon de câble en ligne selon la revendication 1, **caractérisé en ce que** les zones destinées à la rupture (27) s'étendent à chaque fois transversalement à la largeur de ces parois (25).

3. Manchon de câble en ligne selon la revendication 1 ou 2, **caractérisé en ce que** les parois (25) présentent une épaisseur réduite dans la région des zones destinées à la rupture (27).

4. Manchon de câble en ligne selon l'une quelconque des revendications 1 à 3, **caractérisé en ce que** les zones destinées à la déformation (28), lors de l'étanchéification d'un câble dans la région d'introduction de câble respective (17), se déforment sans se rompre et sans déchirer la paroi respective (26).

5. Manchon de câble en ligne selon l'une quelconque des revendications 1 à 4, **caractérisé en ce que** les zones destinées à la déformation (28) sont formées par un contour ondulé de la paroi respective (26).

6. Manchon de câble en ligne selon l'une quelconque des revendications 1 à 5, **caractérisé en ce que** les parois (26) présentent une épaisseur réduite dans la région des zones destinées à la déformation (28).

7. Manchon de câble en ligne selon l'une quelconque des revendications 1 à 6, **caractérisé en ce que** les demi-coques (11, 12) peuvent être comprimées par le biais de vis de fixation (30).

8. Manchon de câble en ligne selon l'une quelconque des revendications 1 à 7, **caractérisé en ce que** les éléments d'étanchéité comprimables et/ou déformables (24) sont des éléments d'étanchéité de type gel.

9. Manchon de câble en ligne selon la revendication 8, **caractérisé en ce que** les éléments d'étanchéité de type gel présentent une dureté Shore A inférieure à 10.

10. Manchon de câble en ligne selon l'une quelconque des revendications 1 à 9, **caractérisé en ce que** les éléments d'étanchéité comprimables et/ou déformables (24) des différentes demi-coques (11, 12) sont de tailles différentes.

11. Manchon de câble en ligne selon l'une quelconque des revendications 1 à 10, **caractérisé en ce que** les éléments d'étanchéité comprimables et/ou déformables (24) d'au moins une demi-coque (12) sont accouplés les uns aux autres par le biais d'éléments d'étanchéité comprimables et/ou déformables (32) s'étendant le long de bords longitudinaux de la demi-coque respective en formant une région d'étanchéité annulaire.
